Europäisches Patentamt

(19) European Patent Office

Office européen des brevets

(11) Numéro de publication : **0 277 442 B1**

(12) **FASCICULE DE BREVET EUROPEEN**

(45) Date de publication du fascicule du brevet :
05.06.91 Bulletin 91/23

(51) Int. Cl.⁵ : **F16C 17/00, F16C 17/10**

(21) Numéro de dépôt : **87402941.6**

(22) Date de dépôt : **21.12.87**

(54) **Coussinet à patin radial et axial combiné.**

(30) Priorité : **23.12.86 FR 8618035**

(43) Date de publication de la demande :
**10.08.88 Bulletin 88/32**

(45) Mention de la délivrance du brevet :
**05.06.91 Bulletin 91/23**

(84) Etats contractants désignés :
**CH DE FR GB LI**

(56) Documents cités :
**DE-A- 2 103 830**
**FR-A- 2 286 311**

(56) Documents cités :
**GB-A- 795 669**
**NL-C- 52 528**
**US-A- 1 805 992**
**US-A- 3 146 036**

(73) Titulaire : **FLENDER-GRAFFENSTADEN**
**156 Route de Lyon**
**F-67400 Illkirch-Graffenstaden (FR)**

(72) Inventeur : **Weber, François**
**7 Impasse des Anémones**
**67400 Illkirch (FR)**

(74) Mandataire : **Serin, Jean-Pierre et al**
**Cabinet PIERRE LOYER 77, rue Boissière**
**F-75116 Paris (FR)**

Jouve, 18, rue Saint-Denis, 75001 PARIS

## Description

L'invention concerne un coussinet à patin radial et axial combiné, selon le préambule des revendications 1 et 3 respectivement connu de FR-A-2 286 311.

L'usage de patins destinés à supporter l'effort radial d'un arbre en rotation dans un coussinet, par exemple une turbine ou un moteur est connu.

De tels coussinets sont constitués par un corps de palier annulaire monté dans le carter de la machine et par des patins disposés entre le corps de palier et l'arbre et maintenus en position par des bagues latérales solidaires du corps de palier.

En variante, comme représenté dans le document FR-A-2 286 311, les patins peuvent être disposés dans une rainure prévue circonférentiellement sur l'arbre. Dans une telle réalisation, les patins sont maintenus en place axialement par le contact de leurs faces d'extrémité avec les épaulements radiaux de la rainure.

Ces coussinets ne peuvent toutefois pas servir de butée axiale pour les arbres qui y sont montés en raison de la forme inappropriée des patins et des problèmes de lubrification. Cela entraîne l'emploi séparé d'une telle butée.

L'invention vise à éviter cet inconvénient et à procurer un coussinet du type décrit ci-dessus et servant à la fois de porteur d'effort radial, et de butée axiale à un arbre de machine.

Ce but est atteint selon l'invention en proposant un coussinet à patin, du type comportant un corps de palier et au moins trois patins destinés à absorber les efforts radiaux d'un arbre en rotation dont les patins sont maintenus axialement par des bagues latérales solidaires du corps de palier, avec les caractéristiques des revendications indépendantes 1 ou 3 respectivement :

   – les patins se trouvent dans une chambre limitée dans le sens radial par l'arbre et le corps de palier et dans le sens axial par les bagues latérales et par des faces d'appui de butée axiales solidaires de l'arbre,

   – ladite chambre est noyée par de l'huile pénétrant par des trous percés radialement dans le corps de palier et reliant la périphérie extérieure du corps de palier à ladite chambre,

   – l'intervalle annulaire entre les bagues latérales et les butées axiales portant les faces d'appui est réduit par des nervures annulaires situées à la périphérie radialement interne des bagues latérales, chaque face latérale des patins étant profilée de façon à amorcer un film d'huile entre elle et la face d'appui.

Selon une première forme de réalisation revendication 1, chaque face latérale des patins comporte au moins une partie en pente dans la zone avant du patin par rapport au sens de rotation de l'arbre de façon à amorcer la formation du film d'huile entre elle et la face d'appui solidaire de l'arbre lorsque celui-ci est en rotation. De préférence chaque face latérale comporte deux parties en pente, l'une à chaque extrémité, afin d'amorcer le film d'huile quel que soit le sens de rotation de l'arbre.

Selon une seconde forme de réalisation revendication 3, chaque face latérale des patins comporte au moins une rainure transversale dont au moins un bord présente une pente destinée à amorcer le film d'huile lorsque l'arbre tourne dans le sens approprié. De préférence chaque face latérale des patins comporte deux rainures situées chacune dans la zone d'extrémité des patins afin d'amorcer le film d'huile quel que soit le sens de rotation de l'arbre.

L'invention sera mieux comprise au moyen d'exemples de réalisation décrits ci-après et représentés sur les dessins annexés sur lesquels :

   La figure 1 est une vue partielle en coupe selon la ligne I-I de la figure 2

   La figure 2 est une coupe transversale partielle du coussinet selon l'invention, et

   Les figures 3 et 4 sont des exemples de réalisation de patins pour le coussinet selon l'invention.

Un arbre de machine 1 est monté dans un coussinet situé dans le carter de la machine.

Le coussinet 2 est constitué d'une part par un corps de palier 3 et d'autre part par trois patins 4 dont un seul est représenté sur les figures pour plus de clarté.

Chaque patin 4 a la forme d'un secteur annulaire dont les bords radialement extérieur et intérieur ont des rayons de courbure, différents entre eux et différents de ceux du corps de palier et de l'arbre, afin de permettre l'amorçage et la création d'un film d'huile destiné à procurer une portance.

Les patins 4 sont situés dans une chambre 5 limitée dans le sens radial par l'arbre 1 et le corps de palier 3 et dans le sens axial par les bagues latérales 7 solidaires du corps de palier 3 et par les faces d'appui 8 des butées axiales de l'arbre. Ces butées axiales sont des parties annulaires rapportées sur l'arbre ou intégrées à celui-ci.

La lubrification du coussinet 2 est assurée grâce à des trous 6 percés radialement dans le corps de palier 3 et qui relient la périphérie extérieure du corps à la chambre 5. L'intervalle annulaire entre les bagues latérales 7 et les butées axiales portant les faces d'appui 8 est réduit grâce à des nervures annulaires 10, situées sur la périphérie radialement interne des bagues 7, dont la section est en forme de bec.

Lorsque l'arbre 1 tourne, l'huile pénètre par les trous 6 dans la chambre 5, qui est ainsi noyée et sort axialement entre les bagues 7 et les faces 8 avec un débit réduit du fait des nervures 10.

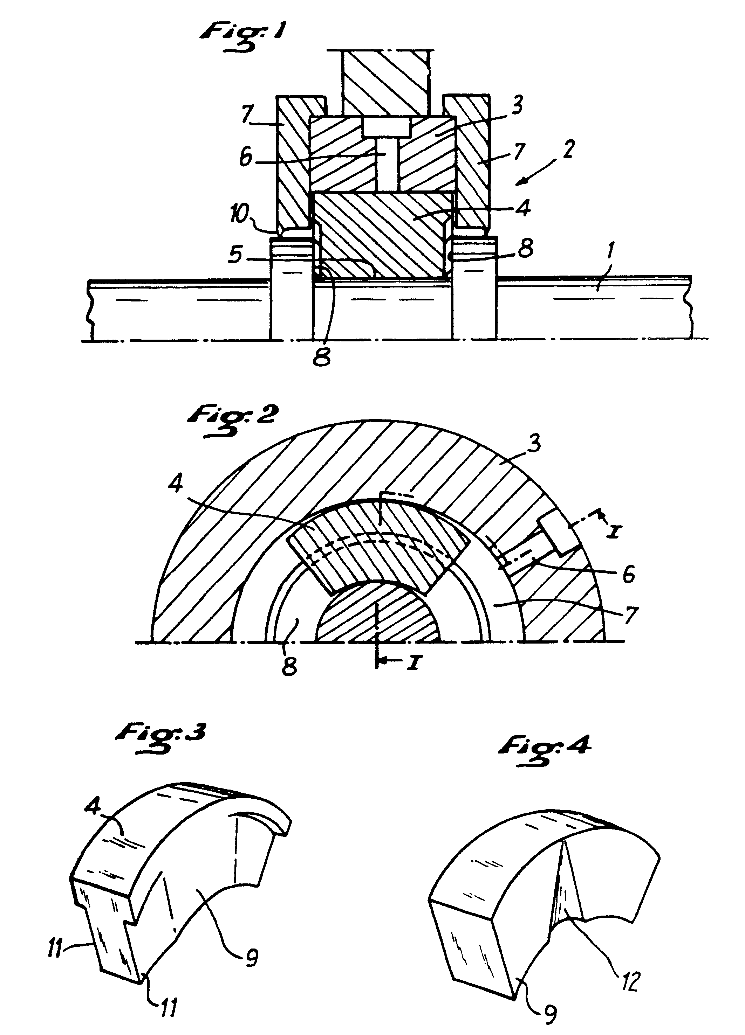

Afin d'accepter une poussée axiale pendant la rotation de l'arbre 1, les deux faces latérales 9 des patins sont pourvues, selon la figure 3, dans leurs zones avant et arrière vis-à-vis des faces d'appui 8, de pentes 11, montant depuis le bord jusqu'à la partie plane. Ces pentes 11 provoquent la formation d'un "coin" d'huile, lors de la rotation de l'arbre dans un sens ou dans l'autre, qui permet la formation d'un film d'huile entre les faces 9 du patin et les surfaces d'appui 8. Une portance axiale est ainsi crée.

Selon une autre réalisation de l'invention, le film d'huile entre les faces 9 du patin et les faces d'appui axial 8 est créé grâce à une rainure 12 située au milieu de chaque face 9. Les bords de la rainure 12 sont inclinés vers la partie plane de la face 9 de façon à créer le coin d'huile qui génèrera le film.

Il va de soi que l'on peut apporter à l'invention toutes modifications destinées à l'améliorer ou à l'adapter à des cas précis.

Par exemple, dans le cas de machines tournant dans un seul sens, le patin peut ne présenter de pente que du côté avant par rapport au sens de rotation ou, si l'on utilise une rainure, celle-ci peut être prévue dans la zone avant et la pente uniquement vers l'arrière.

De même, dans le cas d'un arbre tournant dans les deux sens, on peut prévoir une rainure dans la zone de chaque extrémité, les bords en pente de ces rainures étant inclinés vers la partie plane de la face latérale du patin.

## Revendications

1. Coussinet à patin, du type comportant un corps de palier (3) et au moins trois patins (4) destinés à absorber les efforts radiaux d'un arbre (1) en rotation, les patins (4) étant maintenus axialement par des bagues latérales (7) solidaires du corps de palier (3) caractérisé par le fait que :
   – les patins (4) se trouvent dans une chambre (5) limitée dans le sens radial par l'arbre (1) et le corps de palier (3) et dans le sens axial par les bagues latérales (7) et par des faces d'appui (8) de butées axiales solidaires de l'arbre (1),
   – ladite chambre (5) est noyée par de l'huile pénétrant par des trous (6) percés radialement dans le corps de palier (3) et reliant la périphérie extérieure du corps de palier à ladite chambre,
   – l'intervalle annulaire entre les bagues latérales (7) et les butées axiales portant les faces d'appui (8) est réduit par des nervures annulaires (10) situées à la périphérie radialement interne des bagues latérales (7),
   – chaque face latérale (9) des patins comporte au moins une partie en pente (11) dans la zone avant du patin par rapport au sens de rotation de l'arbre, de façon à amorcer la formation du film d'huile entre elle et la face d'appui (8).

2. Coussinet selon la revendication 1 caractérisé par le fait que chaque face latérale (9) comporte deux parties en pente (11), l'une à chaque extrémité, afin d'amorcer le film d'huile quel que soit le sens de rotation de l'arbre.

3. Coussinet à patin, du type comportant un corps de palier (3) et au moins trois patins (4) destinés à absorber les efforts radiaux d'un arbre (1) en rotation, les patins (4) étant maintenus axialement par des bagues latérales (7) solidaires du corps de palier (3) caractérisé par le fait que :
   – les patins (4) se trouvent dans une chambre (5) limitée dans le sens radial par l'arbre (1) et le corps de palier (3) et dans le sens axial par les bagues latérales (7) et par des faces d'appui (8) de butées axiales solidaires de l'arbre (1),
   – ladite chambre (5) est noyée par de l'huile pénétrant par des trous (6) percés radialement dans le corps de palier (3) et reliant la périphérie extérieure du corps de palier à ladite chambre,
   – l'intervalle annulaire entre les bagues latérales (7) et les butées axiales portant les faces d'appui (8) est réduit par des nervures annulaires (10) situées à la périphérie radialement interne des bagues latérales (7),
   – chaque face latérale (9) des patins comporte au moins une rainure transversale (12) dont au moins un bord présente une pente destinée à amorcer le film d'huile lorsque l'arbre tourne dans le sens approprié.

4. Coussinet selon la revendication 3 caractérisé par le fait que chaque face latérale (9) des patins comporte deux rainures situées chacune dans la zone d'extrémité du patin afin d'amorcer le film d'huile quel que soit le sens de rotation de l'arbre.

5. Coussinet selon la revendication 1, caractérisé par le fait que chaque face latérale (9) des patins comporte au moins une rainure transversale (12) dont au moins un bord présente une pente destinée à amorcer le film d'huile lorsque l'arbre tourne dans le sens approprié.

## Ansprüche

1. Gleitwellenlager mit einem Lagergehäuse (3) und mindestens drei Gleitstücken (4) zur Aufnahme der Radialkräfte einer drehbaren Welle (1), wobei die Gleitstücke von Seitenringen (7), die mit dem Lagergehäuse (3) verbunden sind, axial gehalten werden, **dadurch gekennzeichnet, daß**
   – die Gleitstüche (4) sich in einer Kammer (5) befinden, die in radialer Richtung von der Welle (1) und dem Lagergehäuse (3) und in axialer Richtung von den Seitenringen (7) und Abstützflächen (8) von axialen Anschlägen, die mit der Welle (1) verbunden sind, begrenzt wird,
   – die Kammer (5) mit Öl gefüllt wird, das durch Kanäle (6) dringt, die radial in das Lagergehäuse (3) gelegt sind und die äußere Umfangsfläche des Lagergehäuses mit der Kammer verbinden,

– der ringförmige Zwischenraum zwischen den Seitenringen (7) und den die Abstützflächen (8) tragenden axialen Anschläge durch ringförmige Rippen (10) verkleinert ist, die an der radial inneren Umfangsfläche der Seitenringe (7) liegen,

– jede Seitenfläche (9) der Gleitstücke mindestens einen Schrägabschnitt (11) in dem vor dem jeweiligen Gleitstück liegenden Bereich in Bezug auf die Drehrichtung der Welle besitzt, um so die Bildung des Ölfilms zwischen sich und der Abstützfläche (8) einzuleiten.

2. Wellenlager nach Anspruch 1, **dadurch gekennzeichnet, daß** jede Seitenflläche (9) zwei Schrägabschnitte (11) besitzt, von denen sich jeweils eines an jedem Ende befindet, um den Ölfilm in jeder beliebigen Drehrichtung der Welle aufzubauen.

3. Wellenlager mit einem Lagergehäuse (3) und mindestens drei Gleitstücken (4) zur Aufnahme der Radialkräfte einer drehbaren Welle (1), wobei die Gleitstücke (4) von Seitenringen (7), die mit dem Lagergehäuse (3) verbunden sind, axial gehalten werden, **dadurch gekennzeichnet, daß**

– die Gleitstücke (4) sich in einer Kammer (5) befinden, die in radialer Richtung von der Welle (1) und dem Lagergehäuse (3) und in axialer Richtung von den Seitenringen (7) und Abstützflächen (8) von axialen Anschlägen, die mit der Welle verbunden sind, begrenzt wird,

– die Kammer (5) mit Öl gefüllt wird, das durch Kanäle (6) dringt, die radial in das Lagergehäuse (3) gelegt sind und mit äußere Umfangsfläche des Lagergehäuses mit der Kammer verbinden,

– der ringförmige Zwischenraum zwischen den Seitenringen (7) und den die Abstütztflächen (8) tragenden axialen Anschläge durch ringförmige Rippen (10) verkleinert ist, die an der radial inneren Umfangsfläche der Seitenringe (7) liegen,

– jeder Seitenfläche (9) der Gleitstücke mindestens eine querlaufende Aussparung (12) besitzt, von der zumindest ein Rand eine Schrägung zum Aufbau des Ölfilms bei Drehung der Welle in entsprechende Richtung darstellt.

4. Wellenlager nach Anspruch 3, **dadurch gekennzeichnet, daß** jede Seitenfläche (9) der Gleitstücke zwei Aussparungen besitzt, die jeweils im Randbereich des Gleitstückes liegen, um den Ölfilm in jeder beliebigen Drehrichtung der Welle aufzubauen.

5. Wellenlager nach Anspruch 1, **dadurch gekennzeichnet, daß** jede Seitenfläche (9) der Gleitstücke mindestens eine querlaufende Aussparung (12) besitzt, von der zumindest ein Rand eine Schrägung zum Aufbau des Ölfilms bei Drehung der Welle in entsprechende Richtung darstellt.

## Claims

1. Segment bearing, of the type comprising a bearing body (3) and at least three bearing segments (4) to absorb the radial stresses of a shaft (1) which is rotating, the segments (4) being held axially by lateral rings (7) which are integral with the bearing body (3), characterised by the fact that :

– the segments (4) are located in a chamber (5) which is delimited in the radial direction by the shaft (1) and the bearing body (3) and in the axial direction by lateral rings (7) and by bearing faces (8) of axial thrust bearings which are integral with the shaft (1),

– said chamber (5) is flooded by oil penetrating through holes (6) made radially in the bearing body (3) and connecting the outer periphery of the bearing body to said chamber,

– the annular distance between the lateral rings (7) and the axial thrust bearings bearing the bearing faces (8) is reduced by annular ribs (10) located on the radially inner periphery of the lateral rings (7),

– each lateral face (9) of the segments has at least one sloping section (11) in the forward zone of the segment with respect to the direction of rotation of the shaft, so as to initiate the formation of the film of oil between it and the bearing face (8).

2. Bearing according to Claim 1, characterised by the fact that each lateral face (9) comprises two sloping sections (11), one at each end, so as to initiate the film of oil whatever the direction of rotation of the shaft.

3. Segment bearing, of the type comprising a bearing body (4) and at least three segments (4) to absorb the radial stresses of a shaft (1) which is rotating, the segments (4) being held axially by lateral rings (7) which are integral with the bearing body (3), characterised by the fact that :

– the segments (4) are located in a chamber (5) which is delimited in the radial direction by the shaft (1) and the bearing body (3) and in the axial direction by lateral rings (7) and by bearing faces (8) of axial thrust bearings which are integral with the shaft (1),

– said chamber (5) is flooded by oil penetrating through holes (6) made radially in the bearing body (3) and connecting the outer periphery of the bearing body to said chamber,

– the annular distance between the lateral rings (7) and the axial thrust bearings bearing the bearing faces (8) is reduced by annular ribs (10) located on the radially inner periphery of the lateral rings (7),

– each lateral face (9) of the segments has at least one transverse groove (12), at least one edge of which has a slope to initiate the film of oil when the shaft rotates in the appropriate direction.

4. Bearing according to Claim 3, characterised by the fact that each lateral face (9) of the segments comprises two grooves each located in the end zone of the segment so as to initiate the film of oil whatever the direction of rotation of the shaft.

5. Bearing according to Claim 1, characterised by the fact that each lateral face (9) of the segments has at least one transverse groove (12), at least one edge of which has a slope to initiate the film of oil when the shaft rotates in the appropriate direction.

*Fig. 1*

*Fig. 2*

*Fig. 3*

*Fig. 4*